(19) Europäisches Patentamt
European Patent Office
Office européen des brevets

(11) **EP 4 184 225 B1**

(12) **EUROPEAN PATENT SPECIFICATION**

(45) Date of publication and mention of the grant of the patent:
**03.12.2025 Bulletin 2025/49**

(21) Application number: **21842442.2**

(22) Date of filing: **09.07.2021**

(51) International Patent Classification (IPC):
***G02B 5/30*** *(2006.01)* ***G02B 1/14*** *(2015.01)*

(52) Cooperative Patent Classification (CPC):
**G02B 5/3083; G02B 1/14**

(86) International application number:
**PCT/JP2021/025892**

(87) International publication number:
**WO 2022/014478 (20.01.2022 Gazette 2022/03)**

(54) **OPTICAL FILM**

OPTISCHER FILM

FILM OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.07.2020 JP 2020122713**

(43) Date of publication of application:
**24.05.2023 Bulletin 2023/21**

(73) Proprietor: **MITSUBISHI GAS CHEMICAL COMPANY, INC.**
**Chiyoda-ku**
**Tokyo 100-8324 (JP)**

(72) Inventors:
- **KATO, Noriyuki**
  **Tokyo 100-8324 (JP)**
- **IKEDA, Shinya**
  **Niigata-shi, Niigata 950-3121 (JP)**
- **HIRAKAWA, Manabu**
  **Hiratsuka-shi, Kanagawa 254-0016 (JP)**

(74) Representative: **Hoffmann Eitle**
**Patent- und Rechtsanwälte PartmbB**
**Arabellastraße 30**
**81925 München (DE)**

(56) References cited:
**EP-A1- 3 202 815** **WO-A1-2008/130033**
**WO-A1-2017/175693** **WO-A1-2018/016516**
**WO-A1-2019/044875** **WO-A1-2020/080199**
**WO-A1-2020/189409** **JP-A- 2015 200 887**
**US-A1- 2020 224 025**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 184 225 B1

## Description

### Technical Field

The present invention relates to an optical film having a specific wavelength dispersion characteristic.

### Background Art

Optical members such as various display devices are required to be lightweight and have high performance, and it is important to make films thin without impairing optical performance. In particular, thin films used as members of touch panels and smartphones are required to have excellent optical properties as well as physical properties that can withstand practical use.

In order to solve such problems, the use of a transparent resin substrate containing an absorbent having an absorption maximum at a wavelength of 600 to 800 nm is being studied (Patent Document 1).

### Citation List

### Patent Document

Patent Document 1: Japanese Patent No. 5489669

EP 3 202 815 A1 discloses a polycarbonate resin comprising a structural unit represented by general formula (1) below:

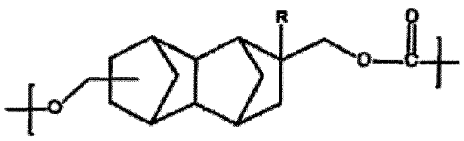

(1)

wherein R represents H, $CH_3$ or $C_2H_5$ and an optical lens obtained by molding the polycarbonate resin.

### Summary of Invention

### Technical Problem

An object of the present invention is to provide an optical film having excellent optical properties and physical properties (water absorption rate and hardness) that can withstand practical use.

### Solution to Problem

As a result of intensive studies to achieve the above-described object, the present inventors found that a film that exhibits, as an optical member, a specific wavelength dispersion characteristic in a wavelength range of 400 nm to 800 nm, which is relevant for practical use, has low water absorption and medium hardness, and is practically useful as an optical film.

Specifically, the present invention is defined in the claims.

### Advantageous Effects of Invention

According to the present invention, an optical film having a specific wavelength dispersion characteristic and excellent water absorption rate or hardness can be provided.

### Brief Description of Drawings

[Figure 1] Figure 1 is a graph showing wavelength dispersion characteristics obtained in Examples 1 to 6 and Comparative Examples 1 and 2.

### Description of Embodiments

Hereinafter, an embodiment for carrying out the present invention (hereinafter simply referred to as "this

embodiment") will be described in detail. The following embodiment is an example for explaining the present invention, and is not intended to limit the present invention to the following contents. The present invention can be appropriately modified and implemented within the scope of the gist thereof.

The optical film of the present invention is characterized in that a wavelength dispersion characteristic at a wavelength of 400 nm to 800 nm satisfies the following general formula (1):

$$\frac{\Delta\lambda}{\Delta 550} = a\,\lambda^{-b} \quad (1)$$

wherein a has a value of 1500 < a < 6600, b has a value of 1.17 < b < 1.27, $\Delta\lambda$ represents a photoelastic coefficient at an arbitrary wavelength $\lambda$ nm in a range of 400 nm to 800 nm, and $\Delta 550$ represents a photoelastic coefficient at a wavelength of 550 nm.

The value of a in the general formula (1) is preferably 1650 < a < 2900, more preferably 1700 < a < 1900, further preferably 1700 < a < 1850, and particularly preferably 1700 < a < 1800.

The value of b in the general formula (1) is preferably 1.17 < b < 1.21 and more preferably 1.17 < b < 1.19.

As a method for calculating the values of a and b in the general formula (1), the values can be obtained by measuring the value of $\Delta\lambda/\Delta 550$ for each of $\lambda$ = 400, 450,..., and 800 nm and plotting the obtained values in the power approximation formula of Excel (registered trademark), i.e., the least squares method.

The thickness of the optical film of the present invention is 10 $\mu$m to 100 $\mu$m. When the thickness of the optical film is within the above-described range, the wavelength dispersion characteristic can be easily controlled.

Considering recycling the optical film after use by specific gravity, e.g., brine or cyclone separation, the optical film should have higher specific gravity than water, and considering the transportation cost, the optical film should have a lighter weight. Based on both requirements, the specific gravity of the optical film of the present invention is preferably 1.01 to 1.39 g/cm$^3$, more preferably 1.10 to 1.30 g/cm$^3$, and particularly preferably 1.17 to 1.25 g/cm$^3$.

The water absorption rate of the optical film of the present invention is preferably 0.5% by mass or less, more preferably 0.3% by mass or less, and particularly preferably 0.2% by mass or less. when the water absorption rate of the optical film is 0.5% by mass or less, dimensional stability can be maintained, which is preferable.

The haze of the optical film of the present invention is preferably less than 0.8, more preferably less than 0.5, further preferably less than 0.2, and particularly preferably 0.01 to 0.15. This range is preferable because a highly transparent film can be obtained.

The pencil hardness of the optical film of the present invention is preferably H to 3B, more preferably HB to 2B, and particularly preferably B to 2B. When the pencil hardness of the optical film is within this range, the surface hardness is appropriate (moderate), making it relatively easy to develop the optical film into various applications in actual use, which is preferable.

When the optical film of the present invention comprises a thermoplastic resin consisting of carbon, hydrogen, and oxygen, there is a high tendency that the general formula (1) above is satisfied, which is preferable. Meanwhile, when a thermoplastic resin containing other components such as nitrogen and sulfur is used, there is a high tendency that the general formula (1) above is not satisfied.

The thermoplastic resin consisting of carbon, hydrogen, and oxygen is at least one selected from the group consisting of a polyester carbonate resin, a polyester resin, a cycloolefin resin, and an acrylic resin. These resins will be described below.

< Polyester Resin and Polyester Carbonate Resin >

The polyester resin and the polyester carbonate resin preferably used in the present invention can be produced by reacting a diorganoester of dicarboxylic acid with a polycarbonate and/or an aromatic diorganodicarbonate.

The polycarbonate used as raw material can be exemplified as a compound represented by the following general formula (I).

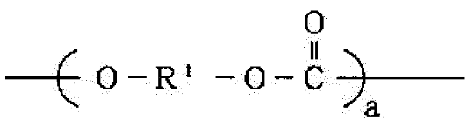

(I)

In the general formula (I), $R^1$ denotes a divalent aromatic hydrocarbon group, an $R^2$-X-$R^3$ group (note that $R^2$ and $R^3$ are each a divalent aromatic hydrocarbon group and X denotes an oxygen atom, a sulfonyl group, a carbonyl group, a

hydrocarbon group, an ester group, or a direct bond) (note that the hydrogen atom of the aromatic ring may be substituted with a halogen atom, a hydrocarbon group, an alkoxy group, a phenoxy group, or the like), and a denotes an integer of 1 to 500. A polycarbonate based on bisphenol A is particularly preferable as the polycarbonate used as a raw material from the viewpoint of the balance between physical properties and cost.

The aromatic diorganodicarbonate used in the present invention can be exemplified as a compound represented by the following general formula (II).

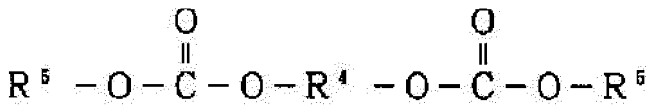 (II)

In the general formula (II), $R^4$ denotes a divalent aromatic hydrocarbon group, an $R^6$-X-$R^7$ group (note that $R^6$ and $R^7$ are each a divalent aromatic hydrocarbon group and X denotes an oxygen atom, a sulfonyl group, a carbonyl group, a hydrocarbon group, an ester group, or a direct bond) (note that the hydrogen atom of the aromatic ring may be substituted with a halogen atom, a hydrocarbon group, an alkoxy group, a phenoxy group, or the like), and $R^5$ denotes an aliphatic hydrocarbon group or an aromatic hydrocarbon group.

Specific examples of the aromatic diorganodicarbonate can include dimethyl, diethyl, and diphenyl carbonates of the aromatic diols shown below. In other words, specific examples of aromatic diols include bisphenol A, bis(4-hydroxyphenyl)methane, bis(4-hydroxy-3,5-dimethylphenyl)methane, bis(4-hydroxy-3,5-dichlorophenyl)methane, 1,1-bis(4-hydroxyphenyl)cyclohexylmethane, 1,1-bis(4-hydroxyphenyl)ethane, 1,1-bis(4-hydroxyphenyl)-1-phenylethane, 1,1-bis( 4-hydroxyphenyl)-3,3,5-trimethylcyclohexane, 4,4'-dihydroxydiphenyl ether, bis(4-hydroxy-3,5-dimethylphenyl) ether, bis(4-hydroxyphenyl) sulfone, bis(4-hydroxy-3,5-dimethylphenyl) sulfone, 4,4'-dihydroxybenzophenone, 2,2-bis(4-hydroxy-3,5-dimethylphenyl)propane, tetrabromobisphenol A, tetrachlorobisphenol A, dihydroxydiphenyl, hydroquinone, resorcinol, dihydroxynaphthalene, dihydroxyanthracene, phenolphthalein, pherolescein, 2,2'-dihydroxy-1,1-dinaphthylmethane, and 4,4'-dihydroxydinaphthyl. Of these, a dimethyl carbonate of bisphenol A is particularly preferable because of its easy availability. In the present invention, the above-described polycarbonates and aromatic dialkyl dicarbonates may be used singly or in a combination of two or more.

A diorganoester of dicarboxylic acid used as another raw material in the present invention can be exemplified as a compound represented by the following general formula (III).

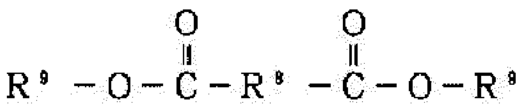 (III)

In the general formula (III), $R^8$ denotes a divalent aromatic hydrocarbon group (note that the hydrogen atom of the aromatic ring may be substituted with a halogen atom, a hydrocarbon group, an alkoxy group, a phenoxy group, or the like) or an aliphatic or alicyclic hydrocarbon group, and $R^9$ denotes an aliphatic hydrocarbon group or aromatic hydrocarbon group.

Specific examples of such a diorganoester of dicarboxylic acid can include dimethyl, diethyl and diphenyl esters of dicarboxylic acid shown below. In other words, specific examples of dicarboxylic acid include terephthalic acid, methoxyterephthalic acid, ethoxyterephthalic acid, fluoroterephthalic acid, chloroterephthalic acid, methylterephthalic acid, isophthalic acid, phthalic acid, methoxyisophthalic acid, diphenylmethane-4,4'-dicarboxylic acid, diphenylmethane-3,3'-dicarboxylic acid, diphenyl ether-4,4'-dicarboxylic acid, diphenyl-4,4'-dicarboxylic acid, naphthalene-1,5-dicarboxylic acid, naphthalene-1,4-dicarboxylic acid, naphthalene-2,6-dicarboxylic acid, naphthalene-1,7-dicarboxylic acid, adipic acid, sebacic acid, azelaic acid, suberic acid, dodecanedicarboxylic acid, 3-methylazelaic acid, glutaric acid, succinic acid, cyclohexane-1,4-dicarboxylic acid, cyclohexane-1,3-dicarboxylic acid, and cyclopentane-1,3-dicarboxylic acid. These may be used singly or in a combination of two or more. Of these, it is particularly preferable to use dimethyl esters of terephthalic acid, isophthalic acid, cyclohexane-1,4-dicarboxylic acid, and cyclohexane-1,3-dicarboxylic acid or mixtures of two or more thereof from the viewpoint of physical properties and cost.

In the present invention, it is preferable to use an esterification catalyst and/or a transesterification catalyst during the reaction. Examples of an esterification catalyst and a transesterification catalyst used in this reaction include those containing at least one element selected from elements commonly referred to as esterification catalysts or transesterification catalysts, including alkali metal elements such as Li, Na, and K elements, alkaline earth metal elements such as Mg, Ca, Sr, and Ba elements, and Sn, Sb, Zn, Cd, Pb, Ti, Zr, Mn, and Co elements, any of which can be used. Moreover, the catalysts are not limited to anhydrides, and hydrates and the like may be used.

The polyester resin and the polyester carbonate resin which are preferably used in the present invention may be produced by either a batch method or a continuous method.

In the method for producing the polyester resin and the polyester carbonate resin which are preferably used in the present invention, the molar ratio of the amount of polycarbonate and/or aromatic diorganodicarbonate used and the amount of diorganoester of dicarboxylic acid used is preferably in a range of 100 : 5 to 100 : 200 and more preferably in a range of 100 : 5 to 100 : 140 (polycarbonate and/or aromatic diorganocarbonate : diorganoester of dicarboxylic acid). When the molar ratio is 100 : 5 or more and less than 100 : 100, a polyester carbonate resin is produced, and when it is 100 : 100 or more, a polyester resin is produced. As the diorganodiester of dicarboxylic acid may have sublimability, the amount of diorganoester of dicarboxylic acid added is made relatively in excess compared to the amount of polycarbonate and/or aromatic diorganodicarbonate added in producing a polyester resin such that a polyester resin can be easily produced. Further, for example, when the above-described molar ratio is less than 100 : 5, the characteristics of the polyester carbonate resin cannot be effectively expressed, while when it is above 100 : 200, a large excess of diorganoester of dicarboxylic acid used is excessively costly, which are problematic.

Suitable co-solvents such as diphenyl ether, substituted cyclohexane, decahydronaltarene, and the like may also be used in the present invention. In the present invention, various compounds may be added to impart desired properties. For example, it is possible to use a branching agent or the like to adjust the viscosity. In addition, for example, an antioxidant may be added in order to obtain a polyester resin and a polyester carbonate resin with low coloring. In general, the weight average molecular weight of the polyester resin and the polyester carbonate resin according to the present invention is preferably in a range of 3000 to 150000 and more preferably in a range of 3000 to 100000 in terms of polystyrene.

< Polycarbonate Resin > - Reference -

The polycarbonate resin contains a carbonate ester bond in the molecular main chain. In other words, the polycarbonate resin is not particularly limited as long as it contains a -[OR-OCO]- unit (wherein R denotes an aliphatic group, an aromatic group, or a group containing both an aliphatic group and an aromatic group, which further has a linear structure or a branched structure); however, it is particularly preferable to use a polycarbonate resin containing a structural unit of the following formula (A). By using such a polycarbonate resin, an optical film having excellent impact resistance can be obtained. It is also preferable to use a polycarbonate resin having a fluorene skeleton or a binaphthalene skeleton as described in WO2018/016516 or WO2019/044875.

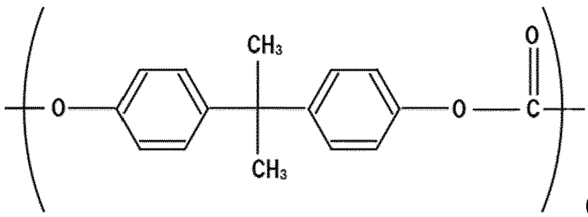

(A)

Specifically, an aromatic polycarbonate resin (e.g., IUPILON S-2000, IUPILON S-1000, and IUPILON E-2000 commercially available from Mitsubishi Engineering-Plastics Corporation) or the like can be preferably used as the polycarbonate resin.

It is also possible to use a polycarbonate resin derived from one or more monomers selected from the group consisting of bisphenoxyethanol fluorene, bisphenol fluorene, biscresol fluorene, 1,1'-binaphthyl-2,2'-diol, 2,2'-bis(2-hydroxyethoxy)-1,1'-binaphthalene, 1,4-cyclohexanedimethanol, tricyclodecanedimethanol, isosorbide, spiroglycol, and pentacyclopentadecanedimethanol.

The glass-transition temperature of the polycarbonate resin is preferably 120°C to 160°C, more preferably 125°C to 155°C, and particularly preferably 130°C to 150°C.

It is preferable to synthesize the polycarbonate resin a monohydric phenol represented by the following general formula (B) as an end terminator:

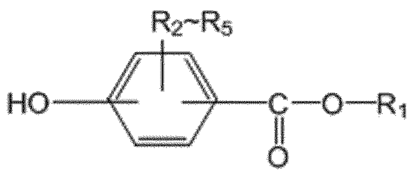

(B).

In the formula, $R_1$ represents an alkyl group containing 8 to 36 carbon atoms or an alkenyl group containing 8 to 36 carbon atoms, $R_2$ to $R_5$ each represent hydrogen, halogen, or an alkyl group containing 1 to 20 carbon atoms or aryl group containing 6 to 12 carbon atoms which may have a substituent, and the substituent is a halogen, an alkyl group containing 1

to 20 carbon atoms, or an aryl group containing 6 to 12 carbon atoms.

An example of the method for producing a polycarbonate resin is a method in which a polycarbonate prepolymer represented by the following general formula (C) is reacted with a diol compound (e.g., butylethylpropanediol or bisphenoxyethanolfluorene) in the presence of a transesterification catalyst:

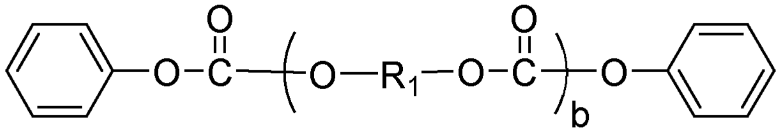

(C)

(b represents an integer of 1 to 50in the general formula (C)).

Another example of the method for producing a polycarbonate resin is a method in which a diol compound and a diaryl carbonate are reacted in the presence of a transesterification catalyst.

The weight average molecular weight of the polycarbonate resin affects the impact resistance and forming conditions of the optical film. In other words, in a case in which the weight average molecular weight is excessively small, the impact resistance of the optical film is lowered, which is not preferable. In a case in which the weight average molecular weight is excessively high, an excessive heat source may be required when layering the polycarbonate resin (A), which is not preferable. Also, some forming methods require high temperatures, which expose the polycarbonate resin to high temperatures, resulting in adverse effects on its thermal stability in some cases. The weight average molecular weight of the polycarbonate resin is preferably 15,000 to 75,000, more preferably 20,000 to 70,000, and further preferably 25,000 to 65,000.

< Cycloolefin Resin >

A cycloolefin resin that is preferably used in the present invention is represented by the following general formula (1):

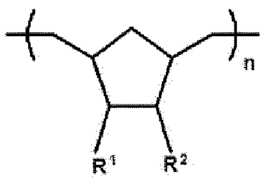

(1)

In the general formula (1), $R^1$ and $R^2$ are each independently a $C_1$-$C_6$ alkyl group or $R^1$ and $R^2$ are cross-linked to form cyclopentane, cyclohexane, or norbornane. Examples of the polymer of the general formula (1) include the following polymer 1 ($R^1$ is a methyl group and $R^2$ is a methyl group), polymer 2 ($R^1$ and $R^2$ are cross-linked to form cyclopentane), and polymers 3 and 4 ($R^1$ and $R^2$ are cross-linked to form norbornane):

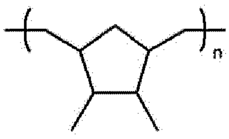

1

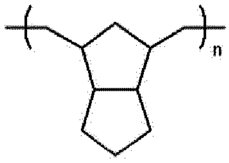

2

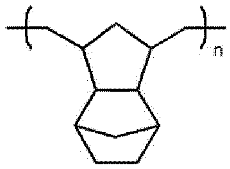

3

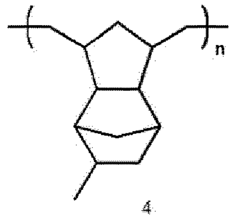

4

In the general formula (1), n represents the repeat number of monomer units; n is an integer of 20 to 800, which is preferably an integer of 50 to 400.

A cycloolefin resin can be produced by using a norbornene derivative as a monomer, carrying out ring-opening metathesis polymerization, and then hydrogenating the resulting polymer. A norbornene derivative can be produced by carrying out the Diels-Alder reaction between an olefin represented by $R^1CH=CHR^2$ and cyclopentadiene. For example, polymer 1 above can be produced by using 2-butene as the olefin, and polymer 2 above can be produced by using cyclopentene.

< Acrylic Resin >

The acrylic resin preferably used in the present invention is a polymer consisting mainly of acrylic monomer units.
The glass-transition temperature (Tg) of the acrylic resin is preferably 95°C to 120°C and more preferably 95°C to 115°C. When Tg is 95°C or more, the surface hardness of the optical film becomes excellent. Meanwhile, when Tg is 120°C or less, the formability of the optical film becomes excellent. Tg described herein can be measured by a differential scanning calorimeter (DSC).
The "glass-transition temperature" is a temperature that is measured as an "extrapolated glass transition start temperature" by increasing the temperature at a temperature increase rate of 10°C/min in accordance with the method described in JIS K7121, 3.(2).
The acrylic resin preferably used in the present invention is a polymer that is obtained from alkyl (meth)acrylate and contains preferably 70% by mass or more of alkyl methacrylate units. The content of alkyl methacrylate units in the acrylic resin is more preferably 80% by mass or more in terms of surface hardness and heat resistance of the optical film, while it is preferably 99% by mass or less in terms of thermal decomposition resistance of the optical film. It is further preferably 85% by mass or more and 99% by mass or less.
As a monomer that is a raw material for the acrylic resin, an alkyl methacrylate having a Tg of 95°C or more in its homopolymer state is preferably used from the viewpoint of obtaining an optical film having high surface hardness. Examples of an alkyl methacrylate that meets this requirement include methyl methacrylate, t-butyl methacrylate, t-butylcyclohexyl methacrylate, and isobornyl methacrylate. These may be used singly or in a combination of two or more. Note that the alkyl group of the alkyl methacrylate may be branched or linear. The number of carbon atoms in the alkyl group of the alkyl methacrylate is preferably 4 or less in terms of heat resistance of the optical film.
The acrylic resin may be a polymer obtained from the alkyl methacrylate or may be a polymer obtained from the alkyl methacrylate and a different monomer (e.g., methacrylic acid or styrene).
The molecular weight (Mw) of the acrylic resin is preferably 30,000 or more in terms of mechanical properties of the optical film and 200,000 or less in terms of formability of the optical film. It is more preferably 50,000 or more and 150,000 or less and further preferably 70,000 or more and 150,000 or less.

Examples

Hereinafter, the present invention will be described in more detail with reference to the following examples. However, these examples are not intended to limit the scope of the present invention.

< Method for Measuring Wavelength Dispersion Characteristics >

Wavelength dispersion characteristics were calculated from the values of the photoelastic coefficient measured at intervals of 50 nm between wavelengths of 400 to 800 nm using a spectroscopic ellipsometer (model name: "M-220") manufactured by JASCO Corporation and the value of the photoelastic coefficient at 550 nm.

< Method for Measuring Film Thickness >

Film thickness was measured using a micrometer MDE-25MX manufactured by Mitutoyo Corporation. The central portion of a film was measured three times, and the average value was adopted as the thickness.

< Method for Measuring Specific Gravity of Film >

Specific gravity of the film was measured using an electronic densimeter SD-200L manufactured by Alfa Mirage Co., Ltd.

< Method for Measuring Water Absorption Rate of Film >

A 100-μm film was prepared and immersed in pure water at 23°C, and after 24 hours, the weight thereof was measured. The water absorption rate was obtained by the following formula.
Water absorption rate (%) = (Film weight after water absorption (g) - Film weight before water absorption (g)) / (Film weight before water absorption (g)) × 100

< Method for Measuring Pencil Hardness of Film >

Pencil hardness of the film was measured by a method in accordance with JIS K-5600.

< Method for Measuring Haze >

Haze was measured in accordance with JIS K7136: 2000 using the following apparatus.

Apparatus: Spectrophotometer for Color & Turbidity "COH400" manufactured by NIPPON DENSHOKU INDUSTRIES CO., LTD

(Example 1)

A 500-mL reactor equipped with a stirrer and a distiller was charged with 183.02 g (0.731 mol) of D-NHEs represented by the following structural formula, 108.36 g (0.487 mol) of D-NDM represented by the following structural formula, 105.76 g (0.494 mol) of diphenyl carbonate, and 20.0 mg ($5.9 \times 10^{-5}$ mol) of titanium tetrabutoxide, nitrogen gas was introduced into the system, and the temperature was raised to 180°C over 1 hour under a nitrogen atmosphere of 760 torr during stirring. When the temperature reached 180°C, the pressure was then reduced to 300 torr over 30 minutes, while the temperature was raised to 255°C over 2 hours from the start of the pressure reduction. When the amount of distilled methanol and distilled phenol reached 60%, the pressure was further reduced to 1 torr or less over 1 hour. Thereafter, the pressure was maintained at 1 torr or less for 30 minutes, thereby obtaining a polyester carbonate resin. The resin thus obtained was dissolved in methylene chloride at a concentration of 10% by weight. The resulting solution was poured onto an electrolytically plated SUS plate. The solvent was removed by evaporation at 25°C, thereby forming a film having a thickness of 100 μm. Subsequently, the film was dried at 100°C for 12 hours so as to remove the residual solvent, thereby obtaining an optical film having a thickness of 100 μm. As a result, the wavelength dispersion characteristic had the relationship of $\Delta\lambda/\Delta 550 = 1745 \times \lambda^{-1.18}$, that is to say, a was 1745 and b was 1.18 in the general formula (1). Table 1 shows the results of measuring the physical properties of the film.

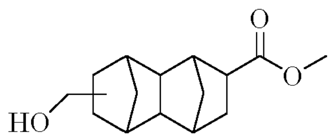

D-NHEs

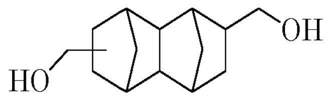

D-NDM

(Example 2) - Reference

A 300-mL reactor equipped with a stirrer and a distiller was charged with 50.00 g (0.225 mol) of D-NDM represented by the following structural formula, 48.68 g (0.227 mol) of diphenyl carbonate, and 0.19 mg (2.3 μmol) of sodium hydrogen carbonate, and the temperature was raised to 215°C over 1 hour under a nitrogen atmosphere of 760 torr during stirring. Heating was performed in an oil bath so as to initiate a transesterification reaction from 200°C. Stirring was started 5 minutes after the start of the reaction, and after 20 minutes, the pressure was reduced from 760 Torr to 200 Torr over 10 minutes. The temperature was heated to 210°C during pressure reduction, and the temperature was raised to 220°C 70 minutes after the start of the reaction. After 80 minutes, the pressure was reduced to 150 Torr and the temperature was raised to 240°C. The pressure was reduced to 1 Torr and maintained for 10 minutes. Accordingly, a polycarbonate resin was obtained. An optical film having a thickness of 100 μm was obtained in the same manner as in Example 1 using the resin thus obtained. As a result, the wavelength dispersion characteristic had the relationship of $\Delta\lambda/\Delta 550 = 1720 \times \lambda^{-1.18}$, that is to say, a was 1720 and b was 1.18 in the general formula (1). Table 1 shows the results of measuring the physical properties of the film.

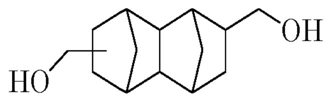

D-NDM

(Example 3) - Reference

The polycarbonate resin obtained in Example 2 was sandwiched between SUS metal plates heated to 250°C, and a pressure of 100 kgf was applied for 3 minutes using a press. A pressure of 100 kgf was further applied for 5 minutes using the press set to 25°C, thereby preparing a film having a thickness of 100 μm. As a result, the wavelength dispersion

characteristic had the relationship of $\Delta\lambda/\Delta550 = 1730 \times \lambda^{-1.18}$, that is to say, a was 1730 and b was 1.18 in the general formula (1). Table 1 shows the results of measuring the physical properties of the film.

(Example 4)

A 500-mL reactor equipped with a stirrer and a distiller was charged with 93.09 g of 1,4-cyclohexanedicarboxylic acid represented by the following structural formula, 189.68 g of BPEF represented by the following structural formula, 50.34 g of ethylene glycol (EG) represented by the following structural formula, and 0.040 g of manganese acetate tetrahydrate, and the temperature was raised to 230°C under a nitrogen atmosphere and maintained for 1 hour such that a predetermined amount of methanol was distilled off. Thereafter, 0.034 g of phosphoric acid and 0.113 g of germanium dioxide were added, the temperature was raised and the pressure was gradually reduced, and polycondensation was finally carried out at 270°C and 0.1 kPa or less. When the melt viscosity reached a suitable level, the reaction was terminated, thereby obtaining a copolyester. A film having a thickness of 100 µm was prepared in the same manner as in Example 1 using the resin thus obtained. As a result, the wavelength dispersion characteristic had the relationship of $\Delta\lambda/\Delta550 = 1814 \times \lambda^{-1.19}$, that is to say, a was 1814 and b was 1.19 in the general formula (1). Table 1 shows the results of measuring the physical properties of the film.

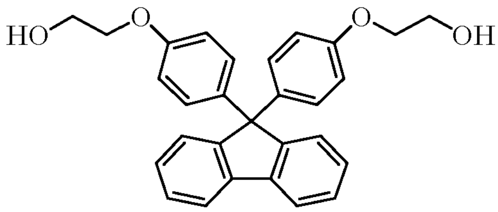

BPEF

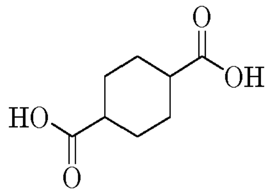

1,4-cyclohexanedicarboxylic acid

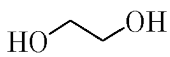

EG

(Example 5)

A 100-µm film was prepared in the same manner as in Example 3 using a commercially available cycloolefin resin having a structure represented by the following formula. As a result, the wavelength dispersion characteristic had the relationship of $\Delta\lambda/\Delta550 = 1702 \times \lambda^{-1.18}$, that is to say, a was 1702 and b was 1.18 in the general formula (1). Table 1 shows the results of measuring the physical properties of the film.

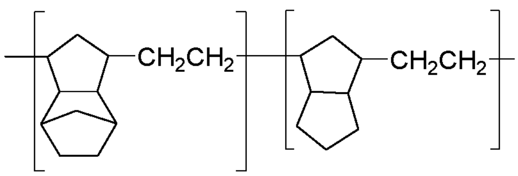

(Example 6)

A 100-µm film was prepared in the same manner as in Example 1 using a commercially available polymethyl methacrylate resin (PMMA). As a result, the wavelength dispersion characteristic had the relationship of $\Delta\lambda/\Delta550 = 1805 \times \lambda^{-1.18}$, that is to say, a was 1805 and b was 1.18 in the general formula (1). Table 1 shows the results of measuring the physical properties of the film.

(Comparative Example 1)

A polyamide was synthesized with reference to Example 3 of Japanese Patent No. 2818398. Specifically, 150 g of dodecanediamine, 128 g of 1,4-cyclohexanedicarboxylic acid, 0.30 g of a 50% $H_3PO_2$ aqueous solution, 0.9 g of benzoic acid, and 0.12 liters of water were heated to 120°C, stirred until homogeneous, and placed in an autoclave. Then, after a polycondensation reaction was carried out at 275°C, the polyamide was taken out as a transparent strand and cooled so as to recover the resin. A 100-$\mu$m film was prepared in the same manner as in Example 3 using the resin obtained. As a result, the wavelength dispersion characteristic had the relationship of $\Delta\lambda/\Delta550 = 1479 \times \lambda^{-1.16}$, that is to say, a was 1479 and b was 1.16 in the general formula (1). Table 1 shows the results of measuring the physical properties of the film.

(Comparative Example 2)

A three-necked flask equipped with a nitrogen inlet tube, a stirrer, and a condenser was charged with 8.210 g (20 mmol) of 2,2-bis(4-(4-aminophenoxy)phenyl)propane as a diamine, and 20 mL of sufficiently dehydrated $\gamma$-butyrolactone (GBL) and 10 mL of toluene were added. A H-PMDA (1,2,4,5-cyclohexanetetracarboxylic dianhydride) powder in an amount of 4.483 g (20 mmol) was added to this solution and the temperature was raised, during which one-pot polymerization was carried out by stirring at 200°C for 4 hours in a nitrogen atmosphere while removing water generated by imidization, thereby obtaining uniform and viscous polyimide varnish having a solute concentration of 30% by mass. This polyimide varnish was applied to a glass substrate and dried in a hot air dryer at 80°C for 2 hours, thereby preparing a polyimide film. This was dried together with the glass substrate in vacuum at 250°C for 1 hour, and then was peeled off from the substrate and further heat-treated at 250°C for 1 hour in vacuum, thereby obtaining a flexible polyimide film having a thickness of 100 $\mu$m. As a result, the wavelength dispersion characteristic had the relationship of $\Delta\lambda/\Delta550 = 6665 \times \lambda^{-1.39}$, that is to say, a was 6665 and b was 1.39 in the general formula (1). Table 1 shows the results of measuring the physical properties of the film.

(Example 7)

A film having a thickness of 100 $\mu$m was prepared in the same manner as in Example 3 using the polyester carbonate resin obtained in Example 1. As a result, the wavelength dispersion characteristic had the relationship of $\Delta\lambda/\Delta550 = 1760 \times \lambda^{-1.183}$, that is to say, a was 1760 and b was 1.183 in the general formula (1). Table 1 shows the results of measuring the physical properties of the film.

(Example 8)

A film having a thickness of 100 $\mu$m was prepared with a film extruder set at a cylinder temperature of 250°C using the polyester carbonate resin obtained in Example 1. As a result, the wavelength dispersion characteristic had the relationship of $\Delta\lambda/\Delta550 = 1690 \times \lambda^{-1.179}$, that is to say, a was 1690 and b was 1.179 in the general formula (1). Table 1 shows the results of measuring the physical properties of the film.

(Example 9)

A film having a thickness of 100 $\mu$m was prepared with a film extruder set at a cylinder temperature of 270°C using the polyester carbonate resin obtained in Example 1. As a result, the wavelength dispersion characteristic had the relationship of $\Delta\lambda/\Delta550 = 1790 \times \lambda^{-1.180}$, that is to say, a was 1790 and b was 1.180 in the general formula (1). Table 1 shows the results of measuring the physical properties of the film.

(Example 10)

The polyester carbonate resin obtained in Example 1 was sandwiched between SUS metal plates heated to 155°C, and a pressure of 100 kgf was applied for 3 minutes using a press. A pressure of 100 kgf was further applied for 5 minutes using the press set to 25°C, thereby preparing a 100-$\mu$m film. As a result, the wavelength dispersion characteristic had the relationship of $\Delta\lambda/\Delta550 = 2000 \times \lambda^{-1.200}$, that is to say, a was 2000 and b was 1.2000 in the general formula (1). Table 1 shows the results of measuring the physical properties of the film.

(Example 11) - Reference

A film having a thickness of 300 $\mu$m was prepared with a film extruder set at a cylinder temperature of 270°C using the polycarbonate resin obtained in Example 7 of WO2018/016516. As a result, the wavelength dispersion characteristic

had the relationship of $\Delta\lambda/\Delta 550 = 1821 \times \lambda^{-1.190}$, that is to say, a was 1821 and b was 1.190 in the general formula (1). Table 1 shows the results of measuring the physical properties of the film.

(Example 12) - Reference

A film having a thickness of 300 $\mu$m was prepared with a film extruder set at a cylinder temperature of 270°C using the polycarbonate resin obtained in Example 6-A of WO2019/044875. As a result, the wavelength dispersion characteristic had the relationship of $\Delta\lambda/\Delta 550 = 1844 \times \lambda^{-1.190}$, that is to say, a was 1844 and b was 1.190 in the general formula (1). Table 1 shows the results of measuring the physical properties of the film.

[Table 1]

| | Example 1 | Example 2 | Example 3 | Example 4 | Example 5 | Example 6 | Comp. Ex. 1 | Comp. Ex. 2 | Example 7 | Example 8 | Example 9 | Example 10 | Example 11 | Example 12 |
|---|---|---|---|---|---|---|---|---|---|---|---|---|---|---|
| a in Formula (1) | 1745 | 1720 | 1730 | 1814 | 1702 | 1805 | 1479 | 6665 | 1760 | 1690 | 1790 | 2000 | 1821 | 1844 |
| b in Formula (1) | 1.180 | 1.180 | 1.180 | 1.190 | 1.180 | 1.183 | 1.162 | 1.390 | 1.183 | 1.179 | 1.180 | 1.200 | 1.190 | 1.190 |
| λ | Δλ/Δ550 | | | | | | | | | | | | | |
| 400 | 1.4838 | 1.4625 | 1.4710 | 1.4527 | 1.4472 | 1.5074 | 1.4008 | 1.6104 | 1.4699 | 1.4482 | 1.5220 | 1.5085 | 1.4583 | 1.4768 |
| 450 | 1.2912 | 1.2727 | 1.2801 | 1.2627 | 1.2594 | 1.3114 | 1.2216 | 1.3672 | 1.2787 | 1.2787 | 1.3245 | 1.3097 | 1.2676 | 1.2836 |
| 500 | 1.1403 | 1.1239 | 1.1305 | 1.1139 | 1.1122 | 1.1577 | 1.0808 | 1.1810 | 1.1288 | 1.1288 | 1.1697 | 1.1542 | 1.1182 | 1.1324 |
| 550 | 1.0190 | 1.0044 | 1.0102 | 0.9945 | 0.9939 | 1.0343 | 0.9675 | 1.0344 | *1.0085* | *1.0085* | 1.0453 | 1.0294 | 0.9983 | 1.0109 |
| 600 | 0.9196 | 0.9064 | 0.9116 | 0.8967 | 0.8969 | 0.9331 | 0.8745 | 0.9166 | 0.9098 | 0.9098 | 0.9433 | 0.9274 | 0.9001 | 0.9115 |
| 650 | 0.8367 | 0.8247 | 0.8295 | 0.8152 | 0.8161 | 0.8488 | 0.7968 | 0.8201 | 0.8276 | 0.8276 | 0.8583 | 0.8424 | 0.8184 | 0.8287 |
| 700 | 0.7666 | 0.7556 | 0.7600 | 0.7464 | 0.7477 | 0.7775 | 0.7311 | 0.7398 | 0.7582 | 0.7582 | 0.7864 | 0.7707 | 0.7493 | 0.7587 |
| 750 | 0.7067 | 0.6966 | 0.7006 | 0.6876 | 0.6893 | 0.7166 | 0.6748 | 0.6721 | 0.6987 | 0.6987 | 0.7249 | 0.7095 | 0.6902 | 0.6989 |
| 800 | 0.6549 | 0.6455 | 0.6492 | 0.6367 | 0.6387 | 0.6639 | 0.6260 | 0.6145 | 0.6474 | 0.6474 | 0.6717 | 0.6566 | 0.6392 | 0.6473 |
| Specific gravity (g/cm$^3$) | 1.18 | 1.20 | 1.20 | 1.22 | 1.01 | 1.19 | 1.00 | 1.40 | 1.18 | 1.18 | 1.18 | 1.18 | 1.25 | 1.25 |
| Water absorption rate (% by mass) | 0.12 | 0.10 | 0.10 | 0.13 | 0.01 | 0.22 | 3.0 | 1.0 | 0.12 | 0.12 | 0.12 | 0.12 | 0.11 | 0.11 |
| Pencil hardness | B | 2B | 2B | HB | H | 4H | H | 5B | B | B | B | B | HB | HB |
| Haze | 0.12 | 0.13 | 0.11 | 0.11 | 0.15 | 0.10 | 0.90 | *0.85* | 0.13 | 0.12 | 0.15 | 0.20 | 0.13 | 0.12 |

## Claims

1. An optical film, **characterized in that** a wavelength dispersion characteristic at a wavelength of 400 nm to 800 nm satisfies the following general formula (1):

$$\frac{\Delta\lambda}{\Delta 550} = a\lambda^{-b} \quad (1)$$

wherein a has a value of $1500 < a < 6600$, b has a value of $1.17 < b < 1.27$, $\Delta\lambda$ represents a photoelastic coefficient at an arbitrary wavelength $\lambda$ nm in a range of 400 nm to 800 nm, and $\Delta 550$ represents a photoelastic coefficient at a wavelength of 550 nm, wherein
the optical film has a thickness of 10 μm to 100 μm and comprises a thermoplastic resin consisting of carbon, hydrogen, and oxygen, wherein the thermoplastic resin is at least one selected from the group consisting of a polyester carbonate resin, a polyester resin, a cycloolefin resin, and an acrylic resin.

2. The optical film according to claim 1, which has a specific gravity of 1.01 to 1.39 $g/cm^3$.

3. The optical film according to claim 1 or 2, which has a water absorption rate of 0.5% by mass or less.

4. The optical film according to any one of claims 1 to 3, which has a haze of less than 0.8.

## Patentansprüche

1. Optischer Film, **dadurch gekennzeichnet, dass**

eine Wellenlängendispersionscharakteristik bei einer Wellenlänge von 400 nm bis 800 nm die folgende allgemeine Formel (1) erfüllt:

$$\frac{\Delta\lambda}{\Delta 550} = a\lambda^{-b} \quad (1)$$

worin a einen Wert von $1.500 < a < 6.600$ aufweist, b einen Wert von $1,17 < b < 1,27$ aufweist, $\Delta\lambda$ einen photoelastischen Koeffizienten bei einer beliebigen Wellenlänge $\lambda$ nm in einem Bereich von 400 nm bis 800 nm darstellt und $\Delta 550$ einen photoelastischen Koeffizienten bei einer Wellenlänge von 500 nm darstellt, wobei der optische Film eine Dicke von 10 μm bis 100 μm aufweist und ein thermoplastisches Harz, bestehend aus Kohlenstoff, Wasserstoff und Sauerstoff, umfasst, wobei das thermoplastische Harz mindestens eines, ausgewählt aus der Gruppe, bestehend aus einem Polyestercarbonatharz, einem Polyesterharz, einem Cycloolefinharz und einem Acrylharz, ist.

2. Optischer Film gemäß Anspruch 1, der ein spezifisches Gewicht von 1,01 bis 1,39 $g/cm^3$ aufweist.

3. Optischer Film gemäß Anspruch 1 oder 2, der eine Wasserabsorptionsrate von 0,5 Masse-% oder weniger aufweist.

4. Optischer Film gemäß einem der Ansprüche 1 bis 3, der eine Trübung von weniger als 0,8 aufweist.

## Revendications

1. Film optique, **caractérisé en ce qu'**

une caractéristique de dispersion de longueur d'onde à une longueur d'onde de 400 nm à 800 nm satisfait la formule générale (1) suivante :

$$\frac{\Delta\lambda}{\Delta 550} = a\,\lambda^{-b} \quad (1)$$

dans lequel a présente une valeur de $1\,500 < a < 6\,600$, b présente une valeur de $1,17 < b < 1,27$, $\Delta\lambda$ représente un coefficient photoélastique à une longueur d'onde arbitraire $\lambda$ nm dans une plage de 400 nm à 800 nm et $\Delta 550$ représente un coefficient photoélastique à une longueur d'onde de 550 nm, dans lequel le film optique présente une épaisseur de 10 $\mu$m à 100 $\mu$m et comprend une résine thermoplastique constituée de carbone, d'hydrogène et d'oxygène, dans lequel la résine thermoplastique est au moins une résine sélectionnée à partir du groupe constitué d'une résine de polyester-carbonate, d'une résine polyester, d'une résine de cyclo-oléfine et d'une résine acrylique.

**2.** Film optique selon la revendication 1, qui présente une gravité spécifique de 1,01 à 1,39 g/cm$^3$.

**3.** Film optique selon la revendication 1 ou la revendication 2, qui présente un taux d'absorption d'eau de 0,5 % en masse ou moins.

**4.** Film optique selon l'une quelconque des revendications 1 à 3, qui présente une turbidité inférieure à 0,8.

[Figure 1]

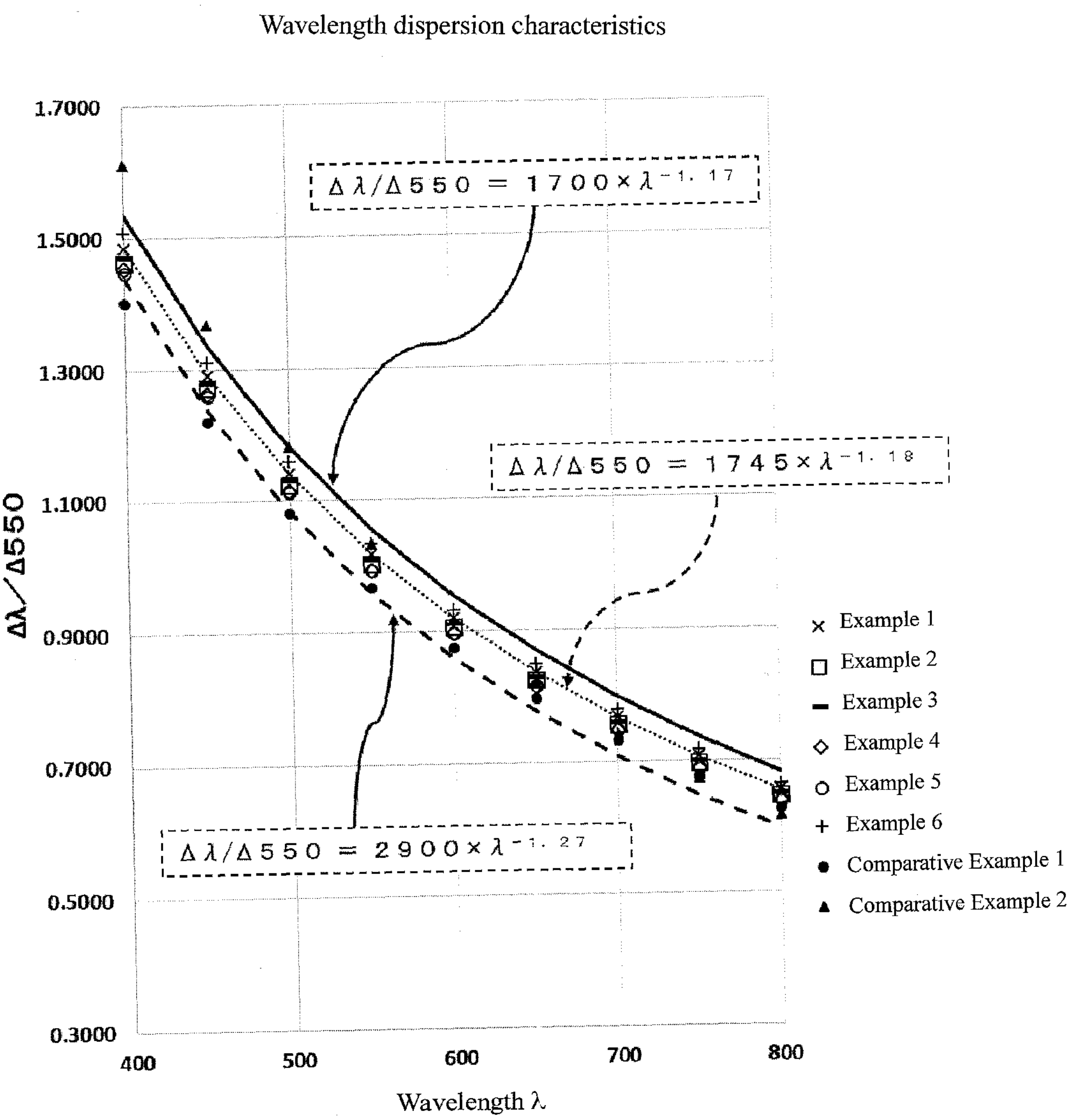
Wavelength dispersion characteristics
1.7000
1.5000
1.3000
1.1000
0.9000
0.7000
0.5000
0.3000
Δλ/Δ550
Δλ/Δ550 = 1700×λ^-1.17
Δλ/Δ550 = 1745×λ^-1.18
Δλ/Δ550 = 2900×λ^-1.27
400
500
600
700
800
Wavelength λ
Example 1
Example 2
Example 3
Example 4
Example 5
Example 6
Comparative Example 1
Comparative Example 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5489669 B
- EP 3202815 A1
- WO 2018016516 A
- WO 2019044875 A
- JP 2818398 B